# EUROPEAN PATENT APPLICATION

(11) **EP 3 696 237 A1**
(43) Date of publication of application: **19.08.2020**
(21) Application number: 19157881.4
(22) Date of filing: 18.02.2019
(51) Int. Cl.: C09B 49/02, D06P 1/30

(54) **PROCESS FOR DYEING A CELLULOSE BASED ARTICLE BY USING OF RECYCLED SULPHUR BLACK DYE**

(71) Applicant: Sengün, Mehmet Korgün, Bahcesehir, Istanbul (TR)
(72) Inventor: Sengün, Mehmet Korgün, Bahcesehir, Istanbul (TR)
(74) Representative: Mutlu, Aydin

(57) **Abstract**

The present invention relates to a novel process for dyeing of a cellulose based article comprising recovery of Sulphur Black dyes in an effluent of a dyeing process, reducing the Sulphur Black dyes with sulfide free agents to form solubilized pigments in leuco form and using of the recycled dye in a subsequent dyeing operation.

## Description

### Technical Field

The present invention relates to a novel process comprising recovery of Sulphur Black dyes in an effluent of a dyeing process and using the same in a subsequent dyeing process. More particularly, the present invention relates to dyeing process comprising reducing of a virgin Sulphur Black dye with sulfide free agents, recycling and regaining of the Sulphur Black dye and solubilizing resulting recycled pigments in leuco form followed by reusage of the same in a dyeing operation. The process is advantageous in that recycling ensures an economical gain by recovery of the pigments, preventing emmission of hazardous chemicals, i.e. sulfides, and thereby providing an eco friendly process featuring safe discharge conditions for the effluent or reuse of waste water in subsequent dyeing operations.

### Background of the Invention

Sulphur dyes are the most commonly used dyes for coloring of cellulosic fibers such as cotton, polyester/cotton blends and paper. The most important member of this class is Sulphur Black 1 (C.I. No 53185) which is produced by reacting 2,4-dinitrophenol with sodium sulfide or sodium polysulfides. Basides being cheaper as compared to other colorants, it has higher color building and light fastness. Although exact structure of Sulphur Black 1 (SB-1) has not yet been identified, it is thought that compounds (a), (b) and (c) as shown below are cross-linked with polysulfide bonds in order to form the SB-1 pigment (Compound d), 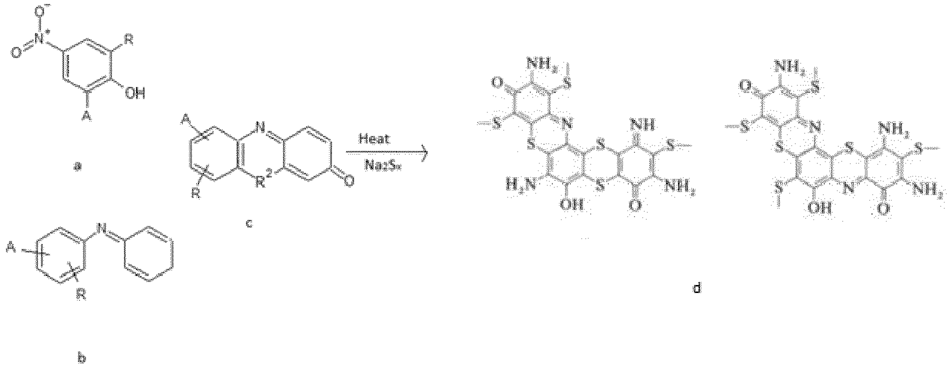 wherein; A: NO₂ or NH₂, R: H or NO₂, and R₂: NH₂, O or S.

Despite of the several advantages of this material for the conventional dyeing processes, it has major drawbacks especially for the environment.

First of all, SB-1 is normally insoluble and therefore needs to be solublized before preparing a dyeing bath. In order to do this, reductants need to be used for reducing di- and poly-sulfide linkages to form the solubilized "leuco" form of the pigment.

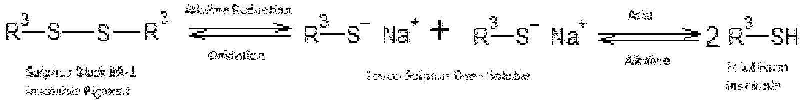

Sodium sulfide is the largest consumed reducing agent in the world which in turn remains in the discharged effluent and causes detrimental effects in environment and human health. Therefore, recent studies have been mostly focusing to produce solubilized SB-1 by using non-sulfide reducing agents.

For instance, Madhu et al., Sulfur Dyeing with Non-sulfide Reducing Agents, J. Textile and Apparel Technology and Management, V. 7, Issue 4, 2012 suggests that non-sulfide reducing agents such as glucose and fructose offer good results in terms of color strength and wash fastness without any significant loss on tensile strength as compared to sodium sulfide.

Likewise, US 3195947 and US 7201780 disclose alkali metal borohydrates as reducing agents without, however, avoiding emmission of hazardous gases such as sulfur dioxide and hydrogen sulfide.

US 3883299 proposes alkali metal hydroxides, reductons and reductonates as the reducing agents which can be hydroxyacetone, dihydroxyacetone, glycol aldehyde, dihydroxybutanone, 2,3-dihydroxyacrylaldehyde (triosereductone), ascorbic acid, cyclopentene diolone (reductic acid), ethyl oz-amino-β-ketobutyrate or a combination thereof.

US 5611818 discloses a process for the production of hydrosoluble dry leuco sulphur dyes with a reducing carbonyl compound and an alkali metal hydroxide. The product is powderized and then reconstituted with water, alkali metal hydroxide and glucose. Within the scope of the experimental studies, the inventors of the instant invention noted that aqueous solution containing the dye as prepared according to this procedure causes a very high viscosity which limits applicability of the dye.

Apart from the foregoing prior art, there have been various attempts to eliminate sulfides from dyeing processes and effluents thereof. WO 2017/048544 A1, for instance, discloses a method for treating sulfide in an aqueous fluid comprising contacting the aqueous fluid with an oxidizer in the presence of at least one sulfur dye or sulfurized vat dye. Likewise, US 4917706 suggests a process for producing a liquid composition of a sulfur dye in pre-reduced leuco form whereby inorganic sulfides and inorganic salts in the final liquid product are decreased. This is achieved by washing the dye in thionated (insoluble) form and using a reducing sugar or a sulfide. Apparently, hydrogen sulfide gas occuring in the process has not been dealt with and recycling of the dye exhausted in the process is not the concern of this process.

As a consequence, there is a long standing need for reducing sulfides and other hazardous chemicals in sulphur black dyeing operations, providing higher economical gain, and saving the large amount of water consumed in the conventional processes.

Therefore, an object of the present invention to provide a process for dyeing cellulose based materials comprising recycling of sulphur black dye after a dyeing operation whereby reduction of the sulphur dye is carried out with non-sulfide reducing agents.

A further object of the present invention is recycling of the sulphur black dye after a dyeing operation which result in a substantially clean water that can be discharged safely or reused in a further dyeing operation.

Still a further object of the present invention is to provide reducing agents improving reduction capacity and efficiency of the recycled pigments.

These and other objects of the current invention are accomplished according to the processes as disclosed in the appended claims.

### Summary of the Invention

The present invention relates to a process for dyeing a cellulose based material with recycled Sulphur Black Dye which is obtained according to the following description. The material to be dyed can be paper, cotton or a blend of cotton and polyester. The material dyed is particularly Denim. This process would then advantageously combined with another process for recycling Denim such that the resulting product after the dyeing process is consists of recycled materials as a whole. This would make sense for environmental and commercial aspects and create unique era for using recycled material in daily life.

Sulphur Black dye in the context of the present invention is preferably Sulphur Black-1 (C.I. No 53185).

The process of the present invention for dyeing a cellulose based material comprises basically the following steps:
- treatment of the Sulphur Black dye with a non-sulfide reducing agent to form a Sulphur Black composition in leuco form,
- preparing a dye bath with said composition and completing the dyeing process,
- drawing of effluent of the dye bath, and treating the effluent with an acid to form a sludge comprising Sulphure Black pigments in an insoluble thionated form,
- treating said sludge with a separator in order to separate Sulphur Black dye and waste water,
- isolating regained Sulphur Black dye as a recycle cake,
- treating said recycled cake with non-sulfide reducing agents to form a recycle dye composition in leuco form, and
- carrying out a subsequent process for dyeing a cellulose based material by using of said recycle dye composition.

The dyeing process preferably comprises also treatment of the cellulose based material with a water bath for washing and an acidic bath for the fixation of the dye whereas effluent of the foregoing baths are mixed with the effluent of the dye bath, and said mixture as a whole is treated with an acid to form said sludge.

The acid used in treatment of the effluent is advantageously an organic acid, which is preferably selected from the group consisting of formic acid and acetic acid. This ensures obtaining of larger particles and brings the mixure to a more readily separable or filterable form. Therefore, in preferred embodiments, the separator comprises a filter press.

In the above process, the pH after the acid treatment of the effluent is adjusted to a value between 4.0 and 5.0 after acidification.

pH of the waste water on the other hand is advantageously adjusted to a value between 6.0 and 9.0 for discharge or reuse of the same in the subsequent dyeing operation.

As mentioned above, the process comprises treatment of said regained Sulphur Black dye (cake) with a non-sulfide reducing agent to form a composition in leuco form. Said reducing agent is preferably selected from the group consisting of monosaccharides, alkali metal hydroxides, sodium borohydrate (NaBH4) and dihydroxyacetone (DHA). More preferably, said reducing agent comprises glucose and NaOH. In preferred embodiment, treatment of the recycle cake is carried out with the following ingredients:

| **Ingredient** | **% (wt)** |
|---|---|
| Recycle Cake | 35-45 |
| Water | 25-35 |
| NaOH (50%) | 8-10 |
| NaBH₄ | 1-3 |
| DHA | 0.5-1.0 |
| Glucose | 5-15 |
| Formaldehyde Sulfoxylate | 0-2 |

Still in a preferred embodiment, the process comprises treatment of the recycle cake with an alkali metal hydroxide to bring the pH to the range of 12.0 - 13.0 and admixing glucose to the mixture. A bead mill agitator can be advantageously used for dispersing of the Sulphur Black dye in leuco form which is found to be more stable.

### Brief Description of the Figures

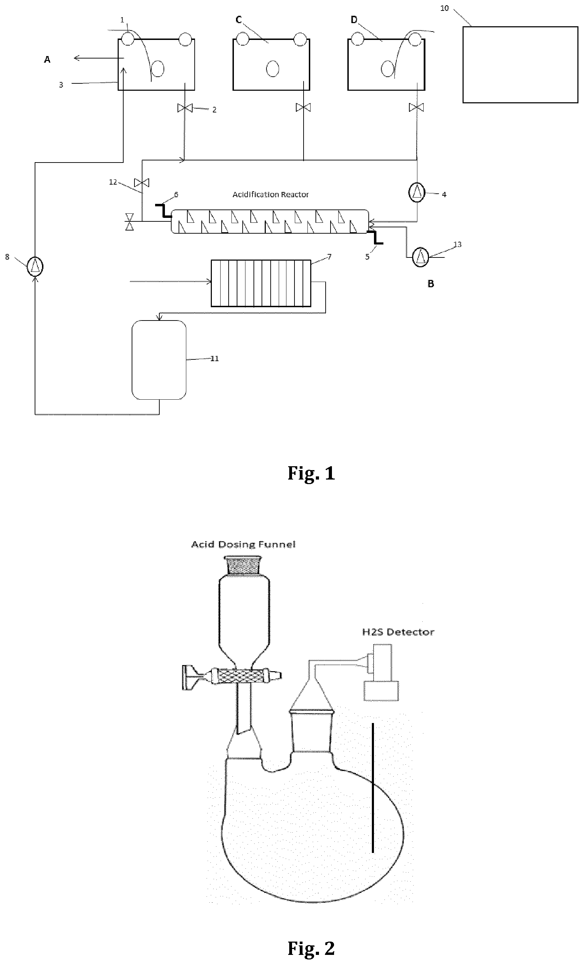

Fig. 1 shows a flowchart of a process for the implementation of SB-1 dyeing, waste water treatment and recycling SB-1 pigments, wherein the reference numerals and letters represent the following;
   - 1: Dye bath roller
   - 2: Pneumatic control valve
   - 3: Dye bath
   - 4: Pump
   - 5: pH sensor at one end of the acidification reactor
   - 6: pH sensor at the other end of the acidification reactor
   - 7: Separator
   - 8: Pump
   - 10: Textile dryer
   - 11: Waste water storage tank
   - 12: Reverse line
   - 13: Pump

   - A: Sulphur Black dye bath
   - B: Acid
   - C: Washing bath
   - D: Neutralization bath
Fig. 2 shows a laboratory set up for measurement of Hidrogen Sulfur emission for Sulphur Black-1 Leuco Dye on Acidification Process.

### Detailed Description of the Invention

Sulphur Black dyes, especially Sulphur Black 1 (C.I. No 53185) is commonly used for dyeing cellulosic materials in textile and paper industry. A particular use of these pigments find place in dyeing of denim. Annual production of SB-1 is around 240.000 tons, and 60 L of water is consumed for each kg of SB-1 in a dye bath. If the hazardous chemicals remain in the effluent, said huge amount of water along with the chemicals is discharged to the environment. In addition, gaseous by products and sulfide compounds cause another risk for the human health.

Therefore, the present invention basically aims to recycle SB-1 in an effluent of a dyeing process and reuse of the same in a subsequent dyeing operation which in turn provides reusable water which is substantially clean in order to be used in subsequent dyeing operations and is safe to be discharged to the environment.

The inventors have duly noted that if the virgin dye at the beginning of the initial dyeing process is reduced with sulfide agents to form the leuco form, sulfide compounds remain in effluents even after recycling of the pigments and causing undesired effects as mentioned above. Therefore it is essential within the scope of the present invention that the virgin Sulphur Black dye in the very first dyeing operation be previously reduced with non-sulfide agents. Said non-sulfide agents may be selected from the group consisting of monosaccharides, alkali metal hydroxides, sodium borohydrate (NaBH4) and dihydroxyacetone (DHA) or other non-sulfide reducing agents known in the art. Monosaccharides such as glucose and fructose along with alkali metal hydroxides such as NaOH and KOH are particularly preferred. More preferably, glucose and NaOH are used in reducing SB-1 pigments.

Referring now to Fig. 1 showing a flow chart of the process implemented by the current invention for dyeing a cotton fabric, the effluent containing SB in the dye bath (3) is guided by a valve (2) to an acidification reactor wherein pH of the aqeous waste is controlled with pH sensors (5, 6). pH of said waste liquid at the outlet is kept at pH 4.0-5.0 and the waste liquid out of said range is automatically reversed. The reactor is preferably equipped with a mixer in order to accelerate thionation of the SB dye. The effluent of the rector is then passed through a liqiid-solid separator (7) which can be a filter press or centrifuge. Filter press is particularly preferred because it provides a dryer sludge (press cake). It is noted that the waste water obtained after the process is colorless and doesn't contain Hydrogen Sulfide. Therefore, it has been envisaged that the water eventually obtained can be collected in a storage tank (11), and can be used in a subsequent dyeing operation or safely discharged to the environment.

The inventors have unexpectedly found that the acids selected from the group consisting of Sulfuric Acid, Hydrochloric Acid, Nitric Acid Acetic Acid, Formic Acid and Citric Acid used in the aicification reactor were all safe and advantageous for obtaining clear, odorless and sulfide free waste water. Filter press technique is thought to be contributing to this effect. It is also surprisingly noted that type of the acid plays a key role in particle size of the SB pigments in the sludge. This is particularly important for the filtration of the sludge. It is noted that acidification with organic acids such as formic acid and acetic acid causes larger particle size in SB pigments which is preferable for filtration. Hence, SB particles are substantially recovered from the waste sludge and thereby reduced in the waste water by using said organic acids.

The cake obtained from the above process is retreated in order to regain the SB dye content. Regained dye may further be treated with non-sulfide reducing agents for reconstitution and conversion into leuco form.

The inventors have found that monosaccharides modified by alkali metal hydroxides give best results for the reduction of the recycled SB dye. Alkali metal hydroxides modify the monosaccharides to hemiacetal forms containing aldose and ketose groups which in turn increase the redox potential of the reductants.

Non-sulfide reducing agents used for reduction of the recycled SB dye can be selected from the group consisting of monosaccharides, alkali metal hydroxides, sodium borohydrate (NaBH4) and dihydroxyacetone (DHA) or other non-sulfide reducing agents known in the art. Monosaccharides such as glucose and fructose along with alkali metal hydroxides such as NaOH and KOH are particularly preferred. More preferably Glucose and NaOH are used whereby NaOH is admixed with glucose such that the latter is modified as mentioned above.

The recycled dye (SB-RCY) obtained with the above process is surprisingly useful in order to be used in a further dyeing operation in terms of color characteristics and fastness. Besides, the waste water obtained after the recycling is found to be clean enough for reusage or discharging. Therefore, recycling of the SB dye not only provides an economical gain of the pigments, but also ensures regain of a clean and safe waste water which is highly advantageous for the environement in consideration of the large amount of water consumption and discharge in sulphur black dyeing processes.

The recycled SB dye according to the present invention is eventually obtained leuco form. The leuco form is obtained by mixing of the filter cake containing recycled SB dye with reducing agents and auxiliary chemicals such as wetting agents. A particular composition for this purpose can be prepared by admixture of the following ingredients:

| **Ingredient** | **% (wt)** |
|---|---|
| Recycle Cake | 35-45 |
| Water | 25-35 |
| NaOH (50%) | 8-10 |
| NaBH₄ | 1-3 |
| DHA | 0.5-1.0 |
| Glucose | 5-15 |
| Formaldehyde Sulfoxylate | 0-2 |

As the wetting agent, Bis 2-ethyl hexyl phosphate may appropriately be used in addition to the above ingredients.

Further aspects and advantageous of the current invention will be apparent for those skilled in the art in view of the Examples hereinbelow which are given solely for showing and understanding of the exemplary embodiments disclosed herein.

### Example 1 Formation of Recycle Mass and Observation of H₂S Gas Emmission

Sulphur Black 1 pigments (SBE, MKS Product) were treated in separate flasks with sulfide (hydrogen sulfide) and non-sulfide (glucose and NaOH) reducing agents in order to obtain dye compositions in leuco form. SB-1 dyes used in the experiment had a redox potential: -705 Mv (Mettler Toledo T-90, DG-140); alkalinity: 6000 mg/g CaCO3 (Titrimetric), viscosity: 55 cP (62 spindle @25 C ,Brookfield), Chloride: < 1%; and Sulfate: <2% as measured by HPLC Ion Chr. (Dionex ICS-1100).

In order to simulate a dyeing application, 50 g of leuco SB-1 samples were added 450 ml of distilled water and mixed with a magnetic stirrer. The samples were taken into a laboratory set up as shown in Fig. 2 having dropping funnels, and acids were added for neutralization. A H₂S measurement detector (Industrial Scientific Gas badge pro, Ventis MX4) was connected with a plastic conduit. pH was controlled with a Wtw-pH 3110 with sentix 41 electrode. pH and **H₂S** gas concentration were controlled for each ml of acid addition. Emmission of gaseous **H₂S** was observed and results are given in Table 1. The neutralized dye solutions after measurements were filtered by using a Buhner funnel and filter paper (Sartarius 389 white 8-12 um poresize, 0,19 mm thicness).

**Table 1. H₂S Emission measurements for Leuco Sulphur Black-1 dyes**

| **10% SB-1 leuco dye reduced with non-sulfide agents solubilized in Water, after Acidification** | | | |
|---|---|---|---|
| Acid For Neutralziation | Consumption | Measured H₂S Conc. | pH |
| 1 N H₂SO₄ | 10,90 ml | 0,00 | 4,42 |
| 1 N HCl | 13,7 ml | 0,00 | 4,47 |
| 1 N HNO₃ | 8,80 ml | 0,00 | 4,43 |
| 1 N Acetic Acid | 19,90 ml | 0,00 | 4,48 |
| 1 N Formic Acid | 17,1 ml | 0,00 | 4,42 |
| 1 N Citric Acid | 37,4 ml | 0,00 | 4,44 |

| **10% SB-1 leuco dye reduced with sulfide agents solubilized in Water, after Acidification** | | | |
|---|---|---|---|
| Acid For Neutralziation | Consumption | Measured H₂S Conc. | pH |
| 1 N H₂SO₄ | 16,60 ml | > 100 ppm | 4,46 |
| 1 N HCl | 18,80 ml | 94 ppm | 4,40 |
| 1 N HNO₃ | 14,10 ml | > 100 ppm | 4,42 |
| 1 N Acetic Acid | 31,40 ml | 78 ppm | 4,59 |
| 1 N Formic Acid | 28,30 ml | 81 ppm | 4,42 |
| 1 N Citric Acid | 50,70 ml | 71 ppm | 4,26 |

Notably, SB-1 dye treated with non-sulfide reducing agents beforehand caused no sulfide emission in acidification and provided a safe procedure for human health.

### Example 2 Particle Size of the Recycled Dye and Waste Water Characteristics

The resulting products of the previous Example at pH value of 4.0-5.0 lost their solubility after acidification and noted to be filterable with a filter paper. It is noted further that the turbidity and color characteristics of the waste water after treatment is affected by the acid type used in the acidification procedure. Notably the insoluble thionated forms resulting from the acidification procedure had varying particle sizes depending on type of the acid. It was observed that dyes neutralized with inorganic acids were more prone to pass through the filter paper. Dye concentrations in waste water were measured with UV Vis Spectrophotometer (Agilent- Cary UV). It is noted that filter paper of having smaller pore size (Sartarius 392 green 5-8 µm poresize, 0,16 mm thickness) ensures a colorless waste water after the filtration.

Table 3 below shows particle size measurements of the dyestuff in waste water (Malvern Mastersizer 3000 with Hydor EV apparatus, Malvern England).

**Table 2. Filtered cake particle size and filtered water turbidity analysis**

| Acidifying Agent | pH | Dv(10) | Dv(50) | Dv(90) | Sartarius 389 (5-8 µm) Filtered Water Turbudity | Sartarius 392 (8-12 µm) Filtered Water Turbudity |
|---|---|---|---|---|---|---|
| 1 N H₂SO₄ | 4,42 | 6,34 µm | 8,92 µm | 16,12 µm | 29 | 381 |
| 1 N HCl | 4,47 | 7,29 µm | 11,47 µm | 22,08 µm | 21 | 266 |
| 1 N HNO₃ | 4,43 | 4,21 µm | 6,42 µm | 18,19 µm | 19 | 403 |
| 1 N Acetic Acid | 4,48 | 11,25 µm | 19,64 µm | 34,59 µm | 10 | 16 |
| 1 N Formic Acid | 4,42 | 10,49 µm | 17,65 µm | 23,49 µm | 11 | 12 |
| 1 N Citric Acid | 4,44 | 13,49 µm | 21,40 µm | 33,42 µm | 16 | 19 |

These tests show that organic acids are more advantageous for the acidification procedure as the particle size of the dyestuff increases and filtration becomes easier. Formic acid, acetic acid or a combination thereof have been considered particularly advantageous as the organic acids because of their lower costs.

### Example 3 Application in Industrial Scale

Industrial application of the process on textile material was carried out using exemplary formulations given in Table 3 along with a process flow chart as shown in Fig. 1.

**Table 3. Dye bath formulation**

| | **Low Conc. (parts)** | **Middle Conc. (parts)** | **High Conc. (parts)** |
|---|---|---|---|
| Sulphur Black-1 | 50 | 100 | 200 |
| Glucose | 15 | 20 | 20 |
| Bis 2-Ethyl Hexyl Phospate (Wetting Agent) | 1 | 1 | 1 |
| Sodium Hydroxide | 10 | 15 | 15 |
| Water | 924 | 864 | 764 |
| Total | 1000 | 1000 | 1000 |

Dye baths (A) were prepared and first bath was implemented. The second bath tank (B) was added water for washing and third bath tank (C) was added with 2g/l acetic acid solutions for fixation. Under operation conditions, as the cellulose based textile material passes through the dye bath, washing bath and neutralization bath, waste waters collected from each of these baths were drawn to a collector and pumped into an acidification reactor. Inlet pH values were measured and outlet pH values were controlled at 4.0-5.0. In case the pH value comes out of this range, reverse line of the waste water is activated. Acid dosing is continuously controlled in order to ensure a continuous flow to the separator (7). Waste water samples and press cake were collected at the outlet of the filter press (filter membrane of polypropylene having air permeability of 70 L/min ±10) which is used as the separator (7).

Analysis of the waste water (Table 4) which was drawn to the process for further treatment showed that SB-1 pigments as analysed with UV-Vis spectrophotometry had an amount of 0.01-10 wt. % in the waste water depending on the concentration in the dye bath.

**Table 4. Inlet waste water analysis for different applications**

| **Parameters** | **Unit** | **Waste Water In Low Conc App.** | **Waste Water In Mid. Conc App.** | **Waste Water In High Conc App.** |
|---|---|---|---|---|
| **Suphur Black -1 Dye** | wt. % | 1,24 | 1,24 | 1,24 |
| **pH** | - | 12,3 | 12,3 | 12,3 |
| **COD** | mg/L | 1917 | 2200 | 2411 |
| **Phosphate** | mg/L | 4,8 | 5,9 | 4,7 |
| **Suspendet Solids** | mg/L | 296 | 349 | 482 |
| **Cl-** | mg/L | 0,24 | 0,29 | 0,33 |
| **Sulfur** | mg/L | <0,05 | <0,05 | <0,05 |
| **Sulfite** | mg/L | <0,05 | <0,05 | <0,05 |

Therefore, it was observed that about 0.1-100 kg of insoluble pigment for 1 m³ of water can be collected upon filtration. Beside of SB-1 pigments, the sludge obtained after the acidification procedure contains also water, neutralization acid and reducing agents such as glucose. However this waste dye was regained by nueutralization with NaOH as explained in the following sections.

In consideration of further treatment of the waste water in the course of removing and regaining recycled dye from the effluent stream, COD and suspended solids have been advantageously reduced as shown in Table 5.

**Table 5. Treated water analysis for different applications**

| **Parameters** | **Unit** | **Waste Water Out Low Conc App.** | **Waste Water Out Mid. Conc App.** | **Waste Water Out High Conc App.** |
|---|---|---|---|---|
| **Suphur Black-1 Dye** | wt. % | - | - | - |
| **pH** | - | 4,49 | 4,72 | 4,55 |
| **COD** | mg/L | 192 | 201 | 226 |
| **Phosphate** | mg/L | 4,02 | 5,84 | 4,44 |
| **Suspendet Solids** | mg/L | 14 | 12 | 12 |
| **Cl**- | mg/L | 0,24 | 0,21 | 0,29 |
| **Sulfur** | mg/L | <0,05 | <0,05 | <0,05 |
| **Sulfite** | mg/L | <0,05 | <0,05 | <0,05 |

The waste water after the filtration with low dirtiness as shown above can easily be neutralized and discharged. For this purpose, the system may further be equipped with a neutralization reactor in order to modify the pH range of the waste water coming from the acidification reactor from 4.0-5.0 to 6.0-9.0 by continuous dosing of NaOH and KOH. In addition, it is shown in the experiments that the waste water can be used again for the preparation of a dye bath by addition of a base such as 1-5 wt. % of NaOH.

The press cake obtained from the filter press was also analyzed, results of which are given below in Table 6.

**Table 6. Filter cake properties**

| **Solid Content** | **Mettler Toledo HB-43** | **Results** |
|---|---|---|
| **pH (%10 Water Dispersion)** | Wtw pH 3210 | 4,89 |
| **Solid Content** | Mettler Toledo HB-43 | %60,76 |
| **Coductivity (%10 Water Dispersion)** | Mettler Toledo T-90 | 1397 µs |
| **Dv(10)** | Malver Mastersize 3000 with Hydor EV apparatus | 16,5 |
| **Dv(50)** | | 21,2 |
| **Dv(90)** | | 29,84 |
| **Free Sulfite** | Titrimetric, Cupric Ammonium Sulfate | < 0,05 |
| **Chloride** | Dionex ICS-1100 HPLC Ion Chromatography | <0,03 |
| **Sulfate** | | < 0,05 |

The filter cake containing insoluble thiols of the pigment may contain 40-75 % of solid content. This amount is important for determining amount of the reducing agents for transition to the leuco form. Leuco forms free of sulfides are obtained because pigments were originally reduced with non-sulfide agents.

### Example 4. Obtaining of Recycled Dye in Leuco Form

45 parts of filter cake was slowly added onto 50 parts of water. The mixture was reated with NaOH at a temperature range of 60-80 °C and pH was adjusted to the range of 12.0 - 13.0. Glucose was admixed to the mixture and redox potential was adjusted to -650 mV which is then allowed to cool under room temperature, and a mixture without precipitation was obtained. SB-1 in leuco forms were mixed and dispersed in a NETZSCH Alpha Series Bead Mill Agitator for 2, 6, 10 and 12 hours under control of the redox potential. The latter is measured (Mettler Toledo T-90, DC-140 SC probe) and controlled against oxidation by addition of the reducing agent to the range of -650 to -750 mV. Thereby, recycled dye in leuco form with improved stability is obtained.

### Example 5. Reuse of the Recycled Dye

The regained dye (leuco SB-1) so prepared was taken into the dyeing process and cotton fabrics treated with dye were analyzed with Datacolor 650 Spectrophotometer whereby fabrics dyed with virgin SB-1 in leuco form were taken as a reference. Breakdown of the results is given Table 6 hereinbelow for different concentrations.

**Table 7. Cotton dyeing results for conventional SB-1 and regain Leuco Sulphur Dye**

| **Virgin SB-1 50 g/L Reference** | **dL** | **Da** | **Db** | **dE** | **% Color Strenght** |
|---|---|---|---|---|---|
| SB-1 Regain Dye 50 g/L | 3,04 | -0,60 | -1,24 | 2,51 | 83 |
| | | | | | |

| **Virgin SB-1 100 g/L Reference** | **dL** | **Da** | **Db** | **dE** | **% Color Strenght** |
|---|---|---|---|---|---|
| SB-1 Regain Dye 100 g/L | 2,04 | -0,21 | -0,56 | 0,92 | 94 |
| | | | | | |

| **Virgin SB-1 200 g/L Reference** | **dL** | **Da** | **Db** | **dE** | **% Color Strenght** |
|---|---|---|---|---|---|
| SB-1 Regain Dye 200 g/L | 2,91 | -0,18 | -0,50 | 0,90 | 93 |

It is noted that color intensity of the recycled dye is substantially comparable with the conventional dyeing process using of virgin SB-1 dye. While the recycled dye provides satisfactory results and same level of color intensity can be obtained by increasing concentration of the recycled dye in the dye bath by 5-20%. The process is commercially advantageous in consideration of the fact that costs for dyeing and waste treatment are substantially reduced.

It is also notable that during neutralization after the dyeing procedure, formation of the hydrogen sulfide was eliminated. The inventors were able to recycle the sludge by using eco-friendly and biodegradable reducing agents. The color building of the recycled pigment was at acceptable levels and it can well be compensated by modifying concentration of the pigments.

The recycled dye in leuco form was notably stable for 24 months without a precipitation.

The waste water after the filtration was decolorized, and COD as well as the suspended solids were substantially reduced. The waste water so obtained can be safely discharged or reused in the dyeing process after a simple neutralization step by bringing pH to a range of 6.0-9.0. Reuse of the waste water can be ensured, for instance, by addition of 1-5 wt. % of NaOH to the treated waste water.

## Claims

1. A process for dyeing a cellulose based material with a Sulphur Black dye comprising the steps of:
- treatment of a sulphur black dye with a non-sulfide reducing agent to form a Sulphur Black composition in leuco form,
- preparing a dye bath with said composition and completing the dyeing process,
- drawing of effluent of the dye bath, and treating the effluent with an acid to form a sludge comprising Sulphure Black pigments in an insoluble thionated form,
- treating said sludge with a separator in order to separate Sulphur Black dye and waste water,
- isolating regained Sulphur Black dye as a recycle cake,
- treating said recycled cake with non-sulfide reducing agents to form a recycle dye composition in leuco form, and
- carrying out a subsequent process for dyeing a cellulose based material by using of said recycle dye composition.

2. A process according to claim 1 wherein the dyeing process further comprises treatment of the cellulose based material with a water bath for washing and an acidic bath for the fixation of the dye whereas effluent of the foregoing baths are mixed with effluent of the dye bath and treated with an acid to form said sludge.

3. A process according to claim 1 wherein the acid for treatment of the effluent is an organic acid.

4. A process according to claim 3 wherein the acid for treatment of the effluent is selected from the group consisting of formic acid and acetic acid.

5. A process according to any of the preceding claims wherein the separator comprises a filter press.

6. A process according to claim 1 wherein the pH after the acid treatment of the effluent is adjusted to a value between 4.0 and 5.0.

7. A process according to claim 1 wherein process further comprises adjusting pH of the waste water to a value between 6.0 and 9.0 for discharge or reuse in a subsequent dyeing operation.

8. A process according to claim 1 wherein the reducing agent for treatment of the recycled cake is selected from the group consisting of monosaccharides, alkali metal hydroxides, sodium borohydrate (NaBH4) and dihydroxyacetone (DHA).

9. A process according to claim 8 wherein the reducing agent comprises glucose and NaOH.

10. A process according to claim 9 wherein the treatment is carried out with following ingredients:
| **Ingredient** | **% (wt)** |
|---|---|
| Recycle Cake | 35-45 |
| Water | 25-35 |
| NaOH (50%) | 8-10 |
| NaBH₄ | 1-3 |
| DHA | 0.5-1.0 |
| Glucose | 5-15 |
| Formaldehyde Sulfoxylate | 0-2 |

11. A process according to any of the claims 8 to 10 wherein the process comprises treatment of the recycle cake with an alkali metal hydroxide to bring the pH to the range of 12.0 - 13.0 and admixing glucose to the mixture.

12. A process according to any of the claims 8 to 10 wherein the process further comprises dispersing of the Sulphur Black dye in a bead mill agitator.

13. A process according to any of the preceding claims wherein the Sulphur Black dye is Sulphur Black-1 (C.I. No 53185).

14. A process according to any of the preceding claims wherein the cellulose based material is made of paper, cotton or a blend of cotton and polyester.

15. A process according to claim 14 wherein the cellulose based material is recycled Denim.
